# EUROPÄISCHE PATENTANMELDUNG

(11) **EP 1 215 145 A1**
(43) Veröffentlichungstag der Anmeldung: **19.06.2002**
(21) Anmeldenummer: 00811171.8
(22) Anmeldetag: 11.12.2000
(51) Int. Cl.: B65G 51/03

(54) **Transportvorrichtung mit einem Luftkissen sowie Verfahren zum Betrieb einer solchen Transportvorrichtung**

(71) Anmelder: ABB RESEARCH LTD., 8050 Zürich (CH)
(72) Erfinder: Knapp, Wolfgang, 5430 Wettingen (CH)
(74) Vertreter: ABB Patent Attorneys

(57) **Zusammenfassung**

Eine Transportvorrichtung (10) umfasst eine Transportebene (11) sowie eine Transportplattform (19), welche oberhalb der Transportebene (11) auf einem Luftkissen weitgehend reibungsfrei in unterschiedlichen Richtungen verschiebbar ist, wobei zur Erzeugung des Luftkissens in der Transportebene (11) verteilt angeordnete Luftdüsen (13) vorgesehen sind, welche jeweils mittels eines Ventils (12,21) einzeln wahlweise geöffnet und geschlossen werden können, und durch welche Druckluft von unten durch die Transportebene (11) nach oben ausströmt, und wobei die Ventile (12,21) der Luftdüsen (13) und die Transportplattform (19) so ausgebildet sind, dass zwischen ihnen eine von der Lage der Transportplattform abhängige Wechselwirkung gegeben ist.

Bei einer solchen Transportvorrichtung (10) wird eine Steuerung dadurch erreicht, dass die Ventile (12,21) der Luftdüsen (13) als mit einer Magnetspule (28) ausgerüstete Magnetventile (12,21) ausgebildet sind, und dass die Transportplattform (19) ferromagnetische Bereiche aufweist, welche in Abhängigkeit von der Lage der Transportplattform mit den Magnetspulen (28) der Magnetventile (12,21) in Wechselwirkung treten.

## Beschreibung

### TECHNISCHES GEBIET

Die vorliegende Erfindung bezieht sich auf das Gebiet der Transporttechnik. Sie betrifft eine Transportvorrichtung gemäss dem Oberbegriff des Anspruchs 1 sowie ein Verfahren zum Betrieb einer solchen Transportvorrichtung.

Eine Transportvorrichtung der genannten Art ist z.B. aus der US-A-4,896,610 bekannt.

### STAND DER TECHNIK

Transportvorrichtungen, bei denen mittels eines zwischen einer Transportplattform und einer Transportebene erzeugten Luftkissens eine weitgehend reibungsfreie Beweglichkeit der Transportplattform erreicht wird, sind seit langem bekannt. Das Luftkissen kann dabei entweder durch die Plattform selbst oder durch eine unter der Transportebene angeordnete Vorrichtung erzeugt werden. Ein bekanntes Beispiel für die erstgenannte Alternative sind die unter dem Namen "Hoovercraft" bekannt gewordenen see- und landgängigen Fahrzeuge für die Personenbeförderung.

Die zweitgenannte Alternative wird vor allem dort eingesetzt, wo einerseits Transportebenen mit vergleichsweise geringer lateraler Ausdehnung vorliegen, und wo die Transportplattform selbst möglichst einfach und ohne zusätzliche Einbauten und Energiequellen aufgebaut sein soll. So wird in der US-A-3,610,695 eine (horizontal arbeitende) Transportvorrichtung für Metallplatten beschrieben, bei der die zu transportierende Metallplatte auf einem Luftpolster gelagert und reibungslos bewegt wird. Das Luftpolster wird durch Luft erzeugt, die fortlaufend durch in der Transportfläche gleichmässig verteilt angeordnete Düsen in den Zwischenraum zwischen Metallplatte und Transportfläche ausströmt. Die Metallplatte wird durch einen elektromagnetisch wirkenden Linearmotor bewegt, der durch unterhalb der Transportfläche in Eisenkernen angeordnete Spulen gebildet wird. Die Spulen werden nach Massgabe der aktuellen Lage der Metallplatte angesteuert, wobei diese Lage durch oberhalb der Metallplatte befindliche (optische) Sensoren bestimmt wird. Nachteilig ist bei dieser Lösung, dass durch alle Luftdüsen der Transportvorrichtung gleichmässig Luft ausströmt, unabhängig davon, wo sich die Metallplatte gerade befindet. Nachteilig ist weiterhin die störende Anordnung der Sensoren oberhalb der zu transportierenden Metallplatte. Schliesslich hat der Linearmotor den Nachteil, dass er nicht nur bezüglich Aufbau und Betrieb mit erheblichem Aufwand verbunden ist, sondern auch hinsichtlich der Transportrichtung inflexibel ist, weil er nur eine Bewegungsrichtung zulässt.

Eine weitere Transportvorrichtung mit einer Kombination aus Linearmotor und Lagerung auf einem Luftpolster ist in der US-A-4,077,507 beschrieben.

Die US-A-3,648,852 zeigt eine Transportvorrichtung mit zwei parallelen Gleitschienen, auf denen eine Transportpalette horizontal verschoben werden kann. In die ebenen Oberflächen der Gleitschienen münden gleichmässig verteilt Luftkanäle zur Erzeugung eines Luftkissens. Die Luftkanäle sind jeweils durch ein Kugelventil verschlossen, dessen Kugel im geschlossenen Zustand des Ventils ein wenig über die Gleitschienenoberfläche hinausragt. Die Kugelventile werden nur dann geöffnet, wenn die Transportpalette beim Darübergleiten die zugehörigen Kugeln gegen den Druck einer Feder in die Gleitschienenoberfläche hineindrückt. Hierdurch wird erreicht, dass nur diejenigen Kugelventile bzw. Luftkanäle aktiviert werden, die für die Bildung des Luftkissens unterhalb der Transportpalette tatsächlich benötigt werden. Nachteilig ist hierbei allerdings der mechanische Eingriff zwischen der Transportpalette und den Ventilkugeln, der die Bewegung behindert, zu Abnutzungen führt und die Anordnung anfällig gegen Funktionsstörungen macht. Auch in diesem Fall ist die Bewegungsrichtung durch die Richtung der Gleitschienen beschränkt. Darüber hinaus ist ein aktiver Bewegungsmechanismus bei dieser Transportvorrichtung nicht vorgesehen.

In der eingangs genannten US-A-4,896,610 wird eine in zwei unabhängigen Richtungen wirksame Transportvorrichtung vorgeschlagen, bei der auf der Transportfläche gleichmässige verteilt mit Ventilen versehene Luftdüsen angeordnet sind. Die Ventile können - ähnlich wie bei der US-A-3,648,852 - als Kugelventile ausgebildet sein, die durch die Transportplattform mechanisch betätigt werden. Es wird aber auch vorgeschlagen (S. 2, Zeilen 34-63 der Druckschrift), elektrisch geschaltete Ventile zu verwenden, die durch unterschiedliche Näherungsdetektionssysteme geöffnet werden, wenn sich die Plattform den Ventilen nähert. Zusätzlich zur Lagerung der Transportplattform auf einem flächigen Luftkissen werden auch Möglichkeiten beschrieben, wie die Plattform mittels eines Fortbewegungsmechanismus aktiv fortbewegt werden kann. Eine Möglichkeit besteht in einem auf der Plattform montierten, hydraulisch betätigten Abstossmechanismus (Fig. 10). Eine andere Möglichkeit eines Fortbewegungsmechanismus besteht in der Verwendung zweier magnetischer Scheiben auf der Plattform, die jeweils von einem batteriebetriebenen Motor in Drehung versetzt werden und mit der metallischen Transportfläche wechselwirken (Fig. 11). Nachteilig ist hierbei, dass die Transportplattform wegen des eingebauten Fortbewegungsmechanismus einen vergleichsweise komplizierten Aufbau hat und eine eigene Energiequelle benötigt. Nachteilig ist auch, dass zur Steuerung der Bewegung eine drahtgebundene oder drahtlose Verbindung zur Plattform vorhanden sein muss.

### DARSTELLUNG DER ERFINDUNG

Es ist daher Aufgabe der Erfindung, eine Transportvorrichtung mit Luftzufuhr durch die Transportebene zu schaffen, welche die Nachteile der bekannten Transportvorrichtungen vermeidet und sich insbesondere durch eine vereinfachte und funktionssichere Steuerung auszeichnet, die ohne grossen Aufwand zur Realisierung eines aktiven Bewegungsmechanismus herangezogen werden kann. Es ist weiterhin Aufgabe der Erfindung, ein Verfahren zum Betrieb einer solchen Transportvorrichtung anzugeben.

Die Aufgabe wird durch die Gesamtheit der Merkmale der Ansprüche 1 und 10 gelöst. Der Kern der Erfindung besteht darin, die Ventile der Luftdüsen als mit einer Magnetspule ausgerüstete Magnetventile auszubilden und bei der Transportplattform ferromagnetische Bereiche vorzusehen, welche in Abhängigkeit von der Lage der Transportplattform mit den Magnetspulen der Magnetventile in Wechselwirkung treten. Hierdurch lassen sich mit einer (passiven) Transportplattform auf einfache Weise über einen einzigen Mechanismus die verschiedenen Aufgaben der Ventilsteuerung, der Lokalisierung und der aktiven Fortbewegung der Transportplattform sicher lösen.

Grundsätzlich ist es denkbar, die Transportplattform nur am Umfang mit ferromagnetischen Bereichen zu versehen. Durch die Wechselwirkung mit den Magnetventilen wird dann in der Transportebene der Rand eines Gebietes festgelegt, welches der Ausdehnung der Transportplattform entspricht. Eine Steuerung kann dann feststellen, welche Magnetventile innerhalb und welche ausserhalb dieses Gebietes liegen, und ein oder mehrere innerhalb des Gebietes liegenden Magnetventile betätigen. Besonders einfach wird die Transportvorrichtung, wenn gemäss einer bevorzugten Ausgestaltung die Transportplattform als (durchgehende) ferromagnetische Trägerplatte ausgebildet ist. Hierdurch wird auf einfache Weise eine Wechselwirkung mit allen unterhalb der Plattform bzw. der Trägerplatte liegenden Magnetventile erreicht.

Besonders intensiv wird die Wechselwirkung, wenn die Magnetspulen der Magnetventile als Ringspulen ausgebildet und mit der Spulenachse senkrecht zur Transportebene unterhalb der Transportebene angeordnet sind, wenn zwischen den Magnetspulen und der Transportebene eine unmagnetische Abdeckplatte, vorzugsweise aus Aluminium, angeordnet ist, und die Luftdüsen durch Bohrungen in der Abdeckplatte gebildet werden, und wenn die Magnetspulen jeweils in einem zur Transportebene hin offenen Joch aus ferromagnetischem Material angeordnet sind.

Wenn die Magnetspulen gleichzeitig zur aktiven Fortbewegung der Transportpalette eingesetzt werden sollen, ist es vorteilhaft, die Magnetventile so auszubilden, dass sie im stromlosen Zustand der Magnetspule geschlossen sind und sich öffnen, wenn die Magnetspule mit einem Strom geeigneter Grösse beaufschlagt wird, wobei die Magnetventile im stromlosen Zustand der Magnetspule jeweils durch ein Federelement geschlossen gehalten werden.

Ein Maximum an Flexibilität lässt sich bei der Transportvorrichtung dadurch erreichen, dass die Magnetventile einzeln ansteuerbar mit einer Steuerung verbunden sind. Insbesondere ist es zweckmässig, wenn die Magnetventile in der Transportebene in einer zweidimensionalen Matrix angeordnet und mit der Steuerung über entsprechende Steuerleitungen verbunden sind, welche den Reihen und Spalten der Matrix zugeordnet sind.

Eine bevorzugte Ausgestaltung des Verfahrens nach der Erfindung ist dadurch gekennzeichnet, dass aus den gemessenen Induktivitäten der Magnetspulen die Ausdehnung und/oder die Lage der Transportplattform bestimmt wird. Hierdurch ist es möglich, verschiedene Transportplattformen gleichzeitig auf der Transportvorrichtung zu bewegen.

Eine aktive Fortbewegung der Transportpalette lässt sich gemäss einer Ausgestaltung der Erfindung auf einfache Weise und ohne zusätzliche Hilfsmittel dadurch erreichen, dass die Transportplattform unter Ausnutzung der Wechselwirkung zwischen der Transportplattform und den Magnetspulen der Magnetventile durch Einschalten bzw. Ausschalten ausgesuchter Magnetventile in eine vorgegebene Bewegungsrichtung bewegt wird.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer schematisierten Darstellung in der Draufsicht eine Transportvorrichtung gemäss einem bevorzugten Ausführungsbeispiel der Erfindung; die Transportplattform bzw. Trägerplatte ist hier weggelassen;
- Fig. 2a-c: in mehreren Teilschritten den Mechanismus der aktiven Fortbewegung einer Transportplatte auf der Tansportvorrichtung gemäss Fig. 1; und
- Fig. 3: den Querschnitt durch die Transportvorrichtung nach Fig. 2 im Bereich eines einzelnen Magnetventils.

### WEGE ZUR AUSFÜHRUNG DER ERFINDUNG

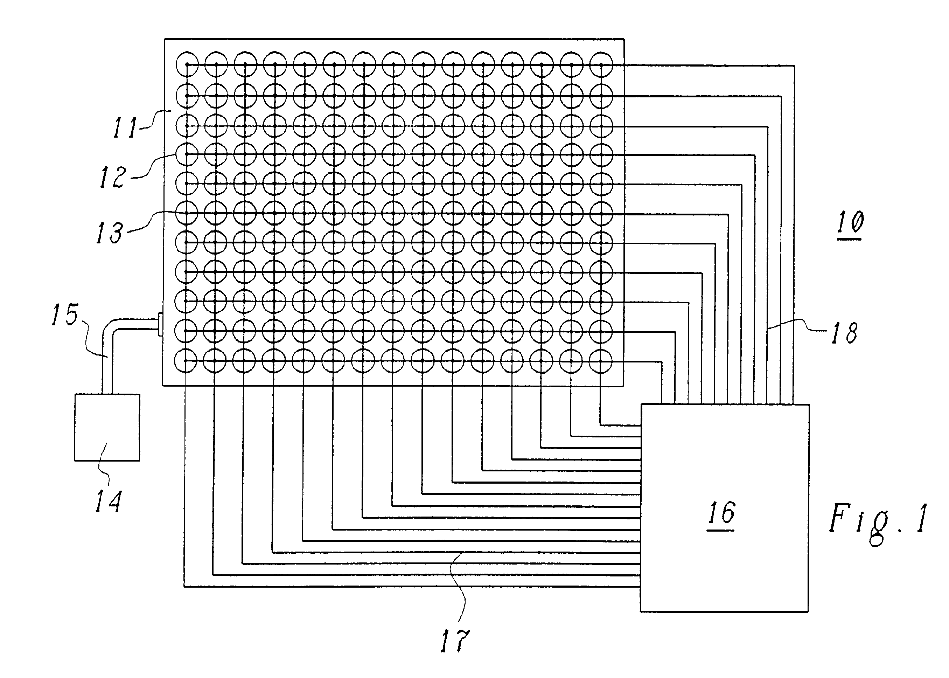

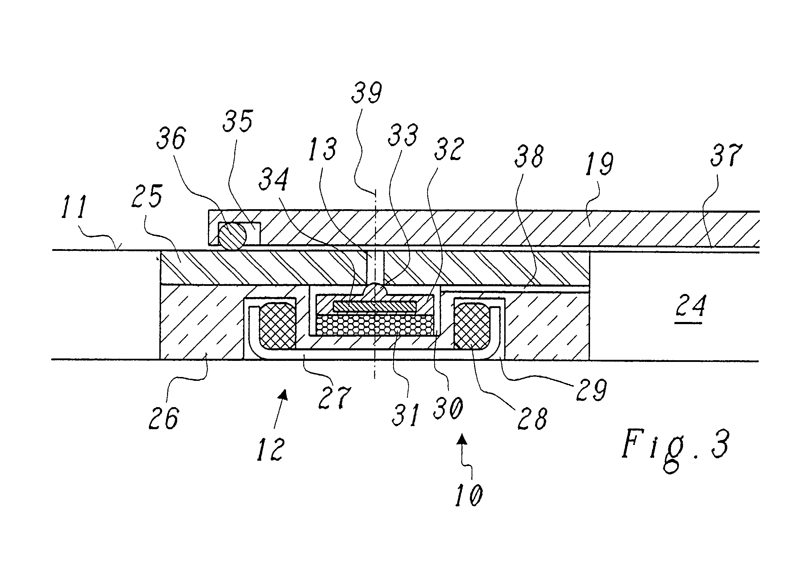

In Fig. 1 ist in einer schematisierten Darstellung in der Draufsicht eine Transportvorrichtung gemäss einem bevorzugten Ausführungsbeispiel der Erfindung wiedergegeben. Die Transportvorrichtung 10 umfasst eine horizontale Transportebene 11, die in ihrer lateralen Ausdehnung an die jeweiligen Anforderungen des zu lösenden Transportproblems angepasst ist. In der Transportebene 11 sind über die Fläche gleichmässig verteilt Luftdüsen 13 vorgesehen, die im dargestellten Beispiel in Reihen und Spalten einer zweidimensionalen Matrix angeordnet sind. Selbstverständlich können die Luftdüsen 13 auch in anderen Anordnungen wie z.B. in versetzten Reihen (hexagonal) angeordnet sein, um beispielsweise eine höhere Packungsdichte und damit eine grössere Positioniergenauigkeit zu erreichen. Der Abstand der Luftdüsen 13 untereinander hängt wesentlich von der Grösse der auf der Transportebene 11 zu bewegenden Transportplattform und der erforderlichen Positioniergenauigkeit ab. Die Luftdüsen werden aus einem unterhalb der Transportebene 11 liegenden Luftraum (24 in Fig. 3) mit Druckluft versorgt, die beispielsweise von einer Luftpumpe 14 erzeugt und über eine Verbindungsleitung 15 eingespeist wird. Die Luftdüsen 13 sind jeweils mit Magnetventilen 12 versehen, die ein gesteuertes Oeffnen und Schliessen der Luftdüsen 13 ermöglichen.

Die Magnetventile 12, die analog zu den Luftdüsen 13 eine Matrix bilden, sind über Steuerleitungen 17, 18, die den Reihen und Spalten der Matrix zugeordnet sind, mit einer Steuerung 16 verbunden. Wenn zwei ausgewählte Steuerleitungen aus der Gruppe der Steuerleitungen 17 und 18 angewählt werden, wird das Magnetventil angesteuert, welches sich im Kreuzungspunkt dieser Steuerleitungen befindet. Es ist aber genausogut auch denkbar, die Magnetventile 12 einzeln durch Zweidrahtleitungen anzusteuern oder die Ansteuerung (dezentral) unmittelbar neben die einzelnen Magnetventile zu platzieren. Die vorgesehene Abdeckplatte aus Aluminium (25 in Fig. 3) und eine weitere, für alle Ventile gemeinsame Elektrode können dabei als elektrische Versorgungsleitungen benützt werden. Damit lässt sich ein Steuerprinzip mit "verteilter Intelligenz" realisieren: Der Ansteuerbefehl für ein Magnetventil kann von seinen Nachbarventilen abhängen oder von diesen übermittelt werden. Auch ein direkte Kommunikation mit der Transportplattform ist möglich.

Die Steuerleitungen 17, 18 dienen aber nicht nur der Ansteuerung der Magnetventile 12, sondern ermöglichen aufgrund der elektromagnetischen Wechselwirkung zwischen den Magnetventilen und der (in Fig. 1 nicht gezeigten) Transportplattform auch eine Bestimmung der Grösse und Position der Transportplattform. Auf diese Weise erhält die Steuerung lagebezogene Informationen, nach denen sie die Ansteuerung der Magnetventile 12 ausrichten kann.

Der beispielhafte Aufbau einer Anordnung aus Luftdüse 13 und Magnetventil 12 unterhalb der Transportebene 11 ist in Fig. 3 im Querschnitt dargestellt. Das Magnetventil 12 ist in einem Tragkörper 26 untergebracht, der vorzugsweise aus einem geeigneten Polymer hergestellt ist. Von der Unterseite her ist in den Tragkörper 26 eine erste, kreisringförmige Aussparung 29 eingebracht, in der die Magnetspule 28 des Magnetventils zusammen mit einem ferromagnetischen (topfförmigen) Joch 27 untergebracht ist. Die Spulenachse 39 der Magnetspule 28 steht dabei senkrecht zur Transportebene 11. Von der Oberseite her ist in den Tragkörper 26 konzentrisch zur ersten Aussparung 29 eine zweite, kreisförmige Aussparung 30 eingebracht. In dieser Aussparung 29 ist der eigentliche Ventilkörper 32 angeordnet, der in seinem Inneren ein ferromagnetisches Betätigungselement 34 aufweist.

Oberhalb des Tragkörpers 26 ist eine (runde) Abdeckplatte 25 aus einem nichtmagnetischen Material, vorzugsweise Aluminium, vorgesehen, deren Oberfläche Teil der Transportebene11 ist, und die im Zentrum (koaxial zur Spulenachse 39) die als vertikale Bohrung ausgeführte Luftdüse 13 aufweist. Der Ventilkörper 32 hat auf der Oberseite ein angeformtes halbkugelförmiges Verschlussteil 33. Unterhalb des Ventilkörpers 32 ist ein Federelement 31, beispielsweise in Form einer Moosgummischeibe, angeordnet, welches den Ventilkörper 32 mit einer Vorspannung beaufschlagt und mit dem Verschlussteil 33 abdichtend gegen die untere Mündung der Luftdüse 13 drückt. Die zweite Aussparung 30 steht mit dem das Magnetventil 12 umgebenden Luftraum 24 über einen Luftkanal 38 in Verbindung. Wird die Magnetspule 28 von der Steuerung 16 mit einem entsprechenden Strom beaufschlagt, wird der Ventilkörper 32 gegen die Kraft des Federelementes 31 nach unten gezogen und die über den Luftkanal 38 zuströmende Druckluft kann aus der Luftdüse 13 nach oben ausströmen. Wird der Strom durch die Magnetspule 28 abgeschaltet, schliesst das Federelement 31 das Ventil.

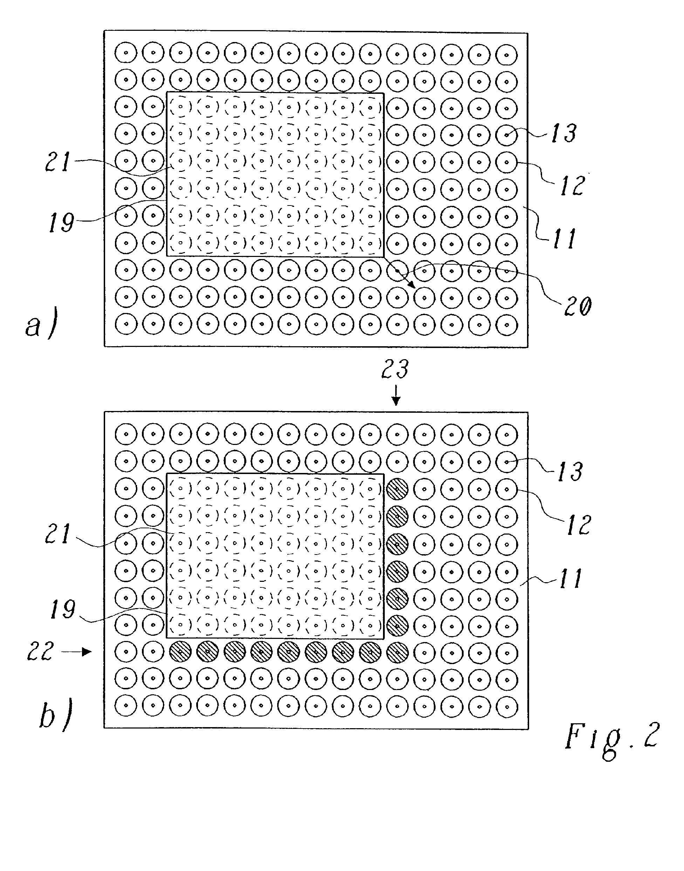

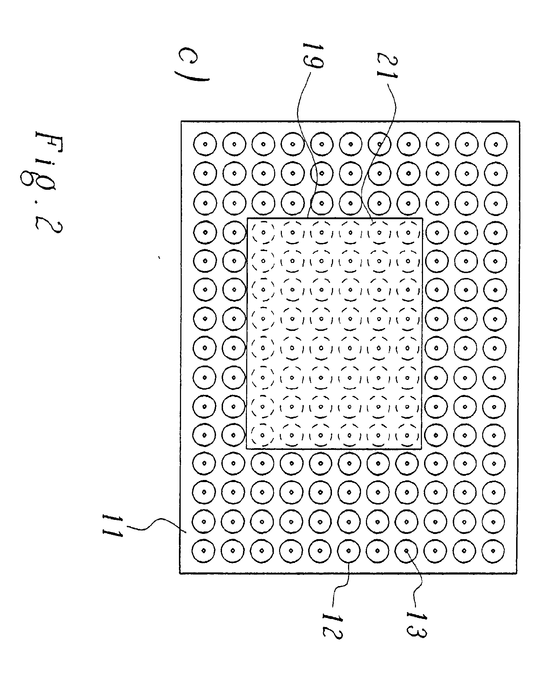

Neben der oben beschriebenen Betätigung des Ventils hat die Magnetspule 28 eine zweite wesentliche Funktion: Ist die auf der Transportebene 11 verschiebbare Transportplattform - wie in Fig. 3 gezeigt - als ferromagnetische Trägerplatte 19 ausgebildet, ergibt sich zwischen der Trägerplatte 19 und der direkt unterhalb der Transportebene 11 angeordneten Magnetspule eine elektromagnetische Wechselwirkung. Diese Wechselwirkung bewirkt, dass sich die Induktivität der Magnetspule 28 ändert, wenn die Trägerplatte 19 von einer die Magnetspule 28 nicht abdeckenden Position in eine die Magnetspule 28 ganz oder teilweise abdeckende Position verschoben wird, wie sie in Fig. 3 dargestellt ist. Diese Aenderung der Induktivität kann von der Steuerung 16 für alle Magnetventile gemessen werden. Da die von der Trägerplatte 19 abgedeckten Magnetspulen (der Magnetventile 21 in Fig. 2) eine deutlich andere Induktivität haben, als die nicht abgedeckten, kann aus der Gesamtheit der Messungen aller Magnetspulen 28 nicht nur die Grösse sondern auch die aktuelle Lage der Trägerplatte 19 auf der Transportebene 11 bestimmt werden. Insbesondere ist es so möglich, dass die Steuerung 16 nur Magnetventile öffnet, die sich unterhalb der Trägerplatte 19 befinden, so dass Druckluft nur durch die für den Aufbau des Luftkissens effektiv notwendigen Luftdüsen ausströmt. Im Prinzip reicht dabei eine geöffnete Luftdüse, um das notwendige Luftkissen zu erzeugen. Werden weitere von der Trägerplatte 19 abgedeckte Magnetventile geöffnet, verringern die von den Magnetspulen erzeugten anziehenden Kräfte die Tragkraft der Trägerplatte 19. Für den Vortrieb sind dagegen nur die an den Kanten liegenden Magnetspulen wirksam.

Wird die Trägerplatte 19 in der Transportebene 11 bewegt, werden die nach der Bewegung nicht mehr von der Trägerplatte 19 abgedeckten Ventile geschlossen, und die neu abgedeckten Ventile geöffnet. Der Verbrauch an Druckluft kann weiter gesenkt werden, wenn an den Rändern der Trägerplatte 19 zur Transportebene 11 hin in einer dafür vorgesehenen Dichtungsnut 35 ein Dichtelement 36 in Form einer Gummidichtung vorgesehen wird, welches den Luftspalt 37 zwischen Trägerplatte 19 und Transportebene 11 nach aussen hin abdichtet.

Neben der Ventilbetätigungsfunktion und der Positionssensorfunktion haben die Magnetspulen 28 aber noch eine dritte Funktion: Werden nämlich diejenigen Magnetspulen mit Strom beaufschlagt, die am Rand aber ausserhalb der Trägerplatte 19 liegen, wird durch die magnetische Wechselwirkung mit der nahen Trägerplatte 19 eine Kraft auf die Trägerplatte 19 ausgeübt, welche die Trägerplatte 19 in Richtung auf die Magnetspulen zu ziehen versucht. Durch geeignete Ansteuerung der Magnetspulen 28 bzw. Magnetventile 12 lässt sich so die Trägerplatte 19 in eine beliebige vorgegeben Richtung bewegen. Eine solche Bewegung ist beispielhaft in den Teilfiguren (a) bis (c) der Fig. 2 dargestellt. Fig. 2(a) zeigt eine Transportebene 11 gemäss Fig. 1 mit einer darauf schwebenden Trägerplatte 19. Einige oder alle der von der Trägerplatte 19 abgedeckten Magnetventile 21 sind eingeschaltet, während die übrigen Magnetventile ausgeschaltet sind. Soll nun die Trägerplatte 19 in die durch den Pfeil angedeutete Bewegungsrichtung 20, d.h., nach rechts unten, bewegt werden, werden zusätzlich die in Bewegungsrichtung liegenden randnahen Ventilreihen 22 und 23 eingeschaltet (schraffiert in Fig. 2(b) dargestellt). Die Trägerplatte 19 wird dadurch in die gewünschte Richtung bewegt (Fig. 2(c)). Es versteht sich dabei von selbst, dass die eingeschalteten Magnetventile, welche im Zuge der Bewegung der Trägerplatte 19 von dieser nicht länger abgedeckt sind, ausgeschaltet werden, um eine Behinderung der Bewegung durch deren Magnetspulen zu vermeiden.

Insgesamt beschreibt die Erfindung ein universelles System zur Bewegung von kleinsten bis schwersten Lasten in einer Transportebene. Die Reibungsverminderung erfolgt dabei durch ein Druckluftkissen, das zwischen der Transportebene und einer ferromagnetischen (Weicheisen-)Trägerplatte erzeugt wird. Die Trägerplatte ist der Lastenträger. Zur Minimierung der Luftverluste ist die Trägerplatte rundum mit einer (Gummi-)Dichtung gegen die Transportebene abgedichtet. Die Druckluft wird - gesteuert durch Magnetventile - durch Luftdüsen aus der Transportebene entnommen. Die Magnetventile sitzen im Zentrum von Magnetspulen, die verteilt über die Transportebene angeordnet sind. Menge, Grösse und Platzierung der Magnetventile richten sich nach den Dimensionen und Erfordernissen (Positioniergenauigkeit) der zu bewegenden Lasten.

Die Magnetspulen erzeugen ein magnetisches Feld im Bereich des Luftkissens und der Trägerplatte, was Kräfte auf dieselbe zur Folge hat. Durch geeignete Ansteuerung der Magnetspulen im Bereich unter und um die Trägerplatte lässt sich diese in beliebiger Richtung verschieben. Je nach Ansteuerung können mehrere Lasten nacheinander oder auch gleichzeitig (Einzelsteuerung) bewegt werden. Die Aktivierung einer Magnetspule hat also gleichzeitig die Öffnung der Luftdüse und die Verschiebung der Last zur Folge, was die Ansteuerung vereinfacht.

Die Anordnung stellt so einen zweidimensionalen Linearmotor dar - mit der Transportebene als Stator und der Trägerplatte als beweglichem Pol. Gleichzeitig wird das Prinzip eines "Hoovercraft"-Luftkissenbootes verwendet, wobei aber die Luft aus dem "Boden" zugeführt wird. Mit einem Betriebsdruck von 1 bar lässt sich so mit einer Trägerplatte der Grösse A4 eine halbe Tonne Last verschieben.

Durch geeignete Zusatzeinrichtungen kann eine zufällig platzierte Last durch die Veränderung der Induktivität der darunterliegenden Magnetspulen "geortet" und auch grob vermessen werden (abgedeckte Spulen). Eventuell eignen sich auch andere Sensoren.

Die Einrichtung hat ausser den Ventilkörpern (und dem darunter liegenden Federelement, z.B. aus offenporigem Moosgummi) keinerlei bewegliche Teile. Die Luftdüsen reinigen sich selbst und die Transportebene kann als Fussboden dienen.

### Mögliche Anwendungen sind:

Automatisieren, Fördern, Sortieren; Automatische Lager; Be- und Entladehilfen für LKW; automatische (Um-)Konfiguration von Fertigungsstrassen; Studios, Bühnen, etc.

### BEZUGSZEICHENLISTE

- 10: Transportvorrichtung
- 11: Transportebene
- 12,21: Magnetventil
- 13: Luftdüse
- 14: Luftpumpe
- 15: Verbindungsleitung
- 16: Steuerung
- 17,18: Steuerleitung
- 19: Trägerplatte (ferromagnetisch)
- 20: Bewegungsrichtung
- 22,23: Ventilreihe
- 24: Luftraum
- 25: Abdeckplatte (z.B. Aluminium)
- 26: Tragkörper
- 27: Joch (ferromagnetisch)
- 28: Magnetspule
- 29: Aussparung (kreisringförmig)
- 30: Aussparung (kreisförmig)
- 31: Federelement (z.B. Moosgummischeibe)
- 32: Ventilkörper
- 33: Verschlussteil (halbkugelförmig)
- 34: Betätigungselement (ferromagnetisch)
- 35: Dichtungsnut
- 36: Dichtelement
- 37: Luftspalt
- 38: Luftkanal
- 39: Spulenachse

## Patentansprüche

1. Transportvorrichtung (10), umfassend eine Transportebene (11) sowie eine Transportplattform, welche oberhalb der Transportebene (11) auf einem Luftkissen weitgehend reibungsfrei in unterschiedlichen Richtungen verschiebbar ist, wobei zur Erzeugung des Luftkissens in der Transportebene (11) verteilt angeordnete Luftdüsen (13) vorgesehen sind, welche jeweils mittels eines Ventils einzeln wahlweise geöffnet und geschlossen werden können, und durch welche Druckluft von unten durch die Transportebene (11) nach oben ausströmt, und wobei die Ventile der Luftdüsen (13) und die Transportplattform so ausgebildet sind, dass zwischen ihnen eine von der Lage der Transportplattform abhängige Wechselwirkung gegeben ist, **dadurch gekennzeichnet, dass** die Ventile der Luftdüsen (13) als mit einer Magnetspule (28) ausgerüstete Magnetventile (12, 21) ausgebildet sind, und dass die Transportplattform ferromagnetische Bereiche aufweist, welche Abhängigkeit von der Lage der Transportplattform mit den Magnetspulen (28) der Magnetventile (12, 21) in Wechselwirkung treten.

2. Transportvorrichtung nach Anspruch 1, **dadurch gekennzeichnet, dass** die Transportplattform als ferromagnetische Trägerplatte (19) ausgebildet ist.

3. Transportvorrichtung nach einem der Ansprüche 1 und 2, **dadurch gekennzeichnet, dass** die Magnetspulen (28) der Magnetventile (12, 21) als Ringspulen ausgebildet und mit der Spulenachse (39) senkrecht zur Transportebene (11) unterhalb der Transportebene (11) angeordnet sind.

4. Transportvorrichtung nach Anspruch 3, **dadurch gekennzeichnet, dass** zwischen den Magnetspulen (28) und der Transportebene (11) eine unmagnetische Abdeckplatte (25), vorzugsweise aus Aluminium, angeordnet ist, und dass die Luftdüsen (13) durch Bohrungen in der Abdeckplatte (25) gebildet werden.

5. Transportvorrichtung nach einem der Ansprüche 1 bis 4, **dadurch gekennzeichnet, dass** die Magnetventile (12, 21) so ausgebildet sind, dass sie im stromlosen Zustand der Magnetspule (28) geschlossen sind und sich öffnen, wenn die Magnetspule (28) mit einem Strom geeigneter Grösse beaufschlagt wird.

6. Transportvorrichtung nach Anspruch 5, **dadurch gekennzeichnet, dass** die Magnetventile (12, 21) im stromlosen Zustand der Magnetspule (28) jeweils durch ein Federelement (31) geschlossen gehalten werden.

7. Transportvorrichtung nach Anspruch 3, **dadurch gekennzeichnet, dass** die Magnetspulen (28) jeweils in einem zur Transportebene (11) hin offenen Joch (27) aus ferromagnetischem Material angeordnet sind.

8. Transportvorrichtung nach einem der Ansprüche 1 bis 7, **dadurch gekennzeichnet, dass** die Magnetventile (12, 21) einzeln ansteuerbar mit einer Steuerung (16) verbunden sind.

9. Transportvorrichtung nach Anspruch 8, **dadurch gekennzeichnet, dass** die Magnetventile (12, 21) in der Transportebene (11) in einer zweidimensionalen Matrix angeordnet und mit der Steuerung (16) über entsprechende Steuerleitungen (17, 18) verbunden sind, welche den Reihen und Spalten der Matrix zugeordnet sind.

10. Verfahren zum Betrieb einer Transportvorrichtung nach einem der Ansprüche 1 bis 9, **dadurch gekennzeichnet, dass** die durch die Wechselwirkung der bewegten Transportplattform mit den Magnetspulen (28) der Magnetventile (12, 21) veränderliche Induktivität der Magnetspulen (28) gemessen wird, und dass zur Erzeugung des Luftkissens diejenigen Magnetventile (21) geöffnet werden, die sich nach Massgabe der gemessenen Induktivität ihrer Magnetspulen (28) unter der Transportplattform befinden.

11. Verfahren nach Anspruch 10, **dadurch gekennzeichnet, dass** aus den gemessenen Induktivitäten der Magnetspulen (28) die Ausdehnung und/oder die Lage der Transportplattform bestimmt wird.

12. Verfahren nach einem der Ansprüche 10 und 11, **dadurch gekennzeichnet, dass** die Transportplattform unter Ausnutzung der Wechselwirkung zwischen der Transportplattform und den Magnetspulen (28) der Magnetventile (12, 21) durch Einschalten bzw. Ausschalten ausgesuchter Magnetventile (22, 23) in eine vorgegebene Bewegungsrichtung (20) bewegt wird.
